## Europäisches Patentamt
## European Patent Office
## Office européen des brevets

(19)

(11) Veröffentlichungsnummer: **0 018 506**
**B1**

(12) **EUROPÄISCHE PATENTSCHRIFT**

(45) Veröffentlichungstag der Patentschrift:
**04.12.85**

(21) Anmeldenummer: **80101716.1**

(22) Anmeldetag: **01.04.80**

(51) Int. Cl.⁴: **C 08 K 7/06,** C 08 K 7/00, C 08 L 63/00, C 08 L 79/08, C 08 K 3/00

(54) Verbundwerkstoff aus kohlenfaserverstärktem Kunststoff und Verfahren zu dessen Herstellung.

(30) Priorität: **27.04.79 DE 2917076**

(43) Veröffentlichungstag der Anmeldung:
**12.11.80 Patentblatt 80/23**

(45) Bekanntmachung des Hinweises auf die Patenterteilung:
**04.12.85 Patentblatt 85/49**

(84) Benannte Vertragsstaaten:
**FR GB IT NL**

(56) Entgegenhaltungen:
**AT - A - 321 590**
**DE - A - 1 810 180**
**DE - A - 2 154 316**
**FR - A - 2 344 589**
**GB - A - 2 010 856**

**CHEMICAL ABSTRACTS, vol. 88, no. 2, 2. Januar 1978, Seite 43, Zusammenfassung 7965u, Columbus, Ohio, USA**

**Die Akte enthält technische Angaben, die nach dem Eingang der Anmeldung eingereicht wurden und die nicht in dieser Patentschrift enthalten sind.**

(73) Patentinhaber: **Messerschmitt-Bölkow-Blohm Gesellschaft mit beschränkter Haftung, Robert-Koch-Strasse, D-8012 Ottobrunn (DE)**

(72) Erfinder: **Siegling, Hans-Friedrich, Schwedenstrasse 2, D-8019 Glonn (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft zunächst einen Verbundwerkstoff, hergestellt aus nicht gegeneinander verankerten Kohlenstoffasern und Kunstharz.

Die Anwendung von Kohlenstoffasern zur Verstärkung von Kunstharz kommt der Forderung nach geringerem Gewicht bei gleicher oder noch höherer Tragkraft gegenüber konventionellen Werkstoffen besonders für den Luft- und Raumfahrzeugbau weitgehend nach. Die dabei auftretenden Probleme hinsichtlich der Gestaltung von zu fertigen Bauteilen werden bereits weitgehend beherrscht, so daß der Anwendung von der konstruktiven Seite kaum mehr Hindernisse im Wege stehen. Es hat sich nun herausgestellt, daß Schwierigkeiten hinsichtlich des Brandverhaltens dieser Verbundwerkstoffe, die aus nicht gegeneinander verankerten Kohlenstoffasern und Kunstharzen hergestellt sind, auftreten. Dabei werden unter nicht verankerten Kunststoffasern solche verstanden, die vor der Verarbeitung bzw. vor dem Tränken mit dem Kunstharz keine Bindung untereinander, z. B. in Form von Geweben, aufweisen. Bei einem Brand von Geräten, die Teile aus kohlefaserverstärktem Kunststoff aufweisen, verbrennt das Kunstharz bereits bei Temperaturen von — je nach Kunststoffart — etwa 400 bis 600° C vollständig, so daß nur noch die erst weit höheren Temperaturen verbrennenden Kunststoffasern nachbleiben. Durch die bei einem Brand, z., B. von Luftfahrzeugen, auftretenden starken Luftturbulenzen werden die relativ leichten und sehr dünnen Kohlenstoffasern mitgerissen und über große Gebiete verteilt. Dabei gelangen die selbst leitfähigen Fasern auch in elektrische und elektronische Geräte und setzen diese dabei außer Funktion.

In der DE-A-2 154 316 wird bereits eine Lösung für den Nachteil vorgeschlagen, die Körpern aus mit Füllstoffen gefüllten Kunststoffen anhaften, indem vornehmlich die Bildung eines festen, vor allem mechanisch beanspruchbaren Gerüstes im gefüllten Kunststoffkörper während des Erhitzungsvorgangs sowie die Ausbildung einer dichtenden Schicht beim Erhitzen oder Abbrennen der der Oberfläche nächsten Kunststoffanteile und damit die Verhinderung des Weiterbrennens angestrebt wird.

Hierbei muß der gesamte oder zumindest der überwiegende Teil des Füllstoffes aus dem sinterfähigen Material sein, um während des Erhitzungsvorgangs das feste, vor allem mechanisch beanspruchbare Gerüst im gefüllten Kunststoffkörper zu bilden und um bereits beim Erhitzen oder Abbrennen der oberflächennächsten Kunststoffanteile eine dichtende Schicht auszubilden, die das Weiterbrennen verhindert.

Diese bekannte Schrift kann somit keinen Hinweis auf das der Erfindung zugrundeliegende Problem geben, weil bei letzterer nicht das Verbrennen des Kunststoffs verhindert werden soll. Da es sich bei den Verbundwerkstoffen nach der Erfindung um hochfeste Materialien handelt, kommen zur Erzielung dieser Wirkung auch nur geringe Prozentsätze der Zusatzmaterialien in Betracht, um die Festigkeit nicht herabzusetzen. Die Füllstoffe nach der DE-A-2 154 316 müssen jedoch, um das Weiterbrennen des Kunststoffs insgesamt zu verhindern, zu sehr hohen Prozentsätzen dem Füllstoff beigegeben werden oder sogar den gesamten Füllstoff ausmachen.

Der Erfindung liegt deshalb die Aufgabe zugrunde, einen Verbundwerkstoff der eingangs genannten Art zu schaffen, welcher auch bei Temperaturen, bei denen die Kunststoffmatrix bereits vollständig verbrannt bzw. vergast ist, noch einen Zusammenhalt der Kunststoffasern gewährleistet.

Diese Aufgabe wird gelöst durch die im kennzeichnenden Teil des Anspruchs 1 angegebenen Merkmale. Weiterbildungen der Merkmale für den Verbundwerkstoff sind in den Ansprüchen 2 bis 5 angegeben.

Die Zusatzmaterialien bilden bereits in kleinen Mengen bei der Verbrennungstemperatur der Kunstharze genügende Mengen von Schlacken oder Agglomeraten, um die gegeneinander nicht verankerten Kunststoffasern weitgehend zu binden und am Wegfliegen zu hindern. Sie bringen wegen des geringen Anteils von maximal 10 Vol-% von Kunstharz nur eine geringe Einbuße an den guten Werkstoffeigenschaften des Verbundwerkstoffs. In Betracht kommen dafür z. B. Pulver oder Fasern aus niedrigschmelzendem Glas und niedrigschmelzenden Metallen. Aus Zusatzmaterial in Form von löslichen Verbindungen eignen sich z. B. metallorganische Verbindungen, die in Kunstharz oder dem Härter löslich sind. Bei Erhitzung durch einen Brand bilden die temperaturfesten Bestandteile der Verbindung eine die Kohlenstoffasern schützende Schlacke. Als weitere Pulver oder löslichen Verbindungen sind übliche, an sich bekannte Flammenschutzmittel einsetzbar, wie z. B. Borax oder andere Borverbindungen, deren Schmelzen die Fasern schützen oder schaumbildende Silikate, die durch Schaumbildung die Fasern verkleben. Die vorgenannten Zusatzmaterialien sind nur Beispiele von möglichen weiteren bekannten Stoffen. Das wesentliche der Erfindung besteht in der Anwendung dieser Stoffe zur Erfüllung der erfindungsgemäßen Aufgabe, die Kohlenstoffasern während eines Brandes zu binden und am Wegfliegen zu hindern, während bei dem durch die DE-OS 2 154 316 vorbekannten Verbundwerkstoff von geringerer Festigkeit die Füllstoffe bei Erhitzung im wesentlichen einen Oberflächenschutz bilden sollen, um ein widerstandsfähiges Gerüst beizubehalten.

Die Erfindung betrifft sodann Verfahren zur Herstellung der vorgeschlagenen Verbundwerkstoffe. Ausgegangen wird von bekannten Verfahren der Art, wie sie im Gattungsbegriff der Ansprüche 6 und 7 beschrieben sind.

Gemäß diesem Teil der Erfindung sind die Verfahren in der im kennzeichnenden Teil der Ansprüche 6 und 7 angegebenen Weise ausgestaltet.

Anspruch 8 ist auf eine vorteilhafte Ausgestaltung des Vorschlags nach Anspruch 7 gerichtet.

Es folgt die Beschreibung von Ausführungsbeispielen der Erfindung.

### Beispiel 1

Ein Verbundwerkstoff soll aus mit Kunststofffasern verstärktem Epoxidharz in Wickeltechnik hergestellt werden. Dabei werden etwa 5—10 Volumenprozente Pulver aus einem niedrigschmelzenden Glas dem Harz hinzugesetzt und vermischt. In Tränkbad aus diesem Gemisch werden die durchlaufenden Kohlenstoffrovings in üblicher Weise getränkt und zu dem Verbundwerkstoff verarbeitet.

### Beispiel 2

Zur Herstellung eines Faservlieses aus Kurzfasern werden etwa 90% Kohlenstoffasern mit etwa 10% niedrigschmelzenden Glasfasern gemischt und in üblicher Weise zu Faservliesen verarbeitet und dann mit einer Polyesterharzlösung getränkt.

### Beispiel 3

Zur Herstellung von Kohlenstoffaser-Prepregs wird einer Epoxid-Härterlösung eine Lösung von Ferrocen in Tetrahydrofuran zugesetzt. Die Fasern werden in üblicher Weise mit diesem Lösungsgemisch getränkt, getrocknet und weiter verarbeitet.

### Beispiel 4

Zur Herstellung eines Bauteils aus einem mit Kohlenstoffasern verstärkten Polyimidharz werden Kohle-Kurzfasern, Polyimidharzpulver und Natriumborat gemischt und dann in üblicher Weise gepreßt und ausgehärtet.

**Patentansprüche**

1. Verbundwerkstoff, hergestellt aus nicht gegeneinander verankerten Kunststoffasern und Kunstharz, dadurch gekennzeichnet, daß zusätzlich ein Material, welches in der Nähe der Verbrennungs- oder Vergasungstemperatur des Kunstharzes sintert, schmilzt oder verschlackt, in einer Menge bis zu 10 Volumenprozent, bezogen auf das Kunstharz, hinzugefügt wird.

2. Verbundwerkstoff nach Anspruch 1, dadurch gekennzeichnet, daß das Zusatzmaterial aus Pulver besteht.

3. Verbundwerkstoff nach Anspruch 1, dadurch gekennzeichnet, daß das Zusatzmaterial aus löslichen Verbindungen besteht, die dem Kunstharz oder seinem Härter zugesetzt sind.

4. Verbundwerkstoff nach Anspruch 1, dadurch gekennzeichnet, daß das Zusatzmaterial aus Fasern besteht.

5. Verbundwerkstoff nach Anspruch 4, dadurch gekennzeichnet, daß die Fasern des Zusatzmaterials verbunden sind, z. B. als Fasergewebe oder Faservlies.

6. Verfahren zur Herstellung von Verbundwerkstoffen nach den Ansprüchen 1 bis 4, bei dem die Kunststofffasern mit dem Kunstharz getränkt werden und das Kunstharz danach ausgehärtet wird, dadurch gekennzeichnet, daß das aus Pulver, löslichen Verbindungen oder aus Fasern bestehende Zusatzmaterial mit dem Kunstharz vermischt wird und dann die Kunststofffasern mit dem Gemisch getränkt werden.

7. Verfahren zur Herstellung von Verbundwerkstoffen nach Anspruch 4 oder 5, bei dem die Kunststoffasern mit dem Kunstharz getränkt werden und der Kunststoff danach ausgehärtet wird, dadurch gekennzeichnet, daß das aus Fasern bestehende Zusatzmaterial bei der Herstellung durch Wickeltechnik zwischen oder auf die Kohlenstoffasern gewickelt oder bei der Herstellung durch Laminierverfahren zwischen oder auf die Kunststoffasern ein- bzw. aufgebracht wird und mit Kunstharzmaterial getränkt wird.

8. Verfahren nach Anspruch 7, dadurch gekennzeichnet, daß dem zum Tränken verwendeten Kunstharz noch anderes Zusatzmaterial in Form von Pulver oder löslichen Verbindungen hinzugesetzt wird.

**Claims**

1. A composite material produced from carbon fibres, which are not mutually anchored, and synthetic resin, characterised in that supplementarily a material which sinters, melts or slags in the vicinity of the temperature of combustion or gasification of the synthetic resin is added in an amount up to 10 percent by volume related to the synthetic resin.

2. A composite material according to claim 1, characterised in that the supplementary material consists of powder.

3. A composite material according to claim 1, characterised in that the supplementary material consists of soluble compounds which are added to the synthetic resin or to its hardener.

4. A composite material according to claim 1, characterised in that the supplementary material consists of fibres.

5. A composite material according to claim 4, characterised in that the fibres of the supplementary material are connected, for example, as a fibre fabric or fibre fleece.

6. A method of producing composite materials according to claims 1 to 4, in which the carbon fibres are impregnated with the synthetic resin and the sythetic resin is afterwards hardened, characterised in that the supplementary material consisting of powder, soluble compounds or of fibres is mixed with the synthetic resin and then the carbon fibres are impregnated with the mixture.

7. A method of producing composite materials according to claims 4 or 5, in which the carbon fibres are impregnated with the synthetic resin and the sythetic resin and the synthetic resin is afterwards hardened, characterised in that the supplementary material consisting of fibres upon producing by winding technology is wound between or onto the carbon fibres or upon production by a laminating process is introduced or respectively applied between or onto the carbon fibres and impregnated with synthetic resin material.

8. A method according to claim 7, characterised in that yet another supplementary material in the form of powder or soluble compounds is added to the synthetic resin used for the impregnation.

**Revendications**

1. Matériau composite préparé à partir de fibres de carbone non rattachées les unes aux autres et de résine synthétique, caractérisé par le fait que l'on y ajoute en plus un matériau qui est fritté, fond ou se scorifie au voisinage de la température de combustion ou de gazéification de la résine synthétique, en une quantité allant jusqu'à 10% en volume, par rapport à la résine synthétique.

2. Matériau composite selon la revendication 1, caractérisé par le fait que le matériau d'appoint est constitué de poudre.

3. Matériau composite selon la revendication 1, caractérisé par le fait que le matériau d'appoint est constitué de composés solubles qui sont ajoutés à la résine synthétique ou à son durcisseur.

4. Matériau composite selon la revendication 1, caractérisé par le fait que le matériau d'appoint est constitué de fibres.

5. Matériau composite selon la revendication 4, caractérisé par le fait que les fibres du matériau d'appoint sont reliées par exemple sous forme de tissu fibreux ou de nontissé fibreux.

6. Procédé pour la préparation de matériaux composite selon les revendications 1 à 4, dans lequel les fibres de carbone sont imprégnées de la résine synthétique et la résine synthétique est ensuite durcie, caractérisé par le fait que le matériau d'appoint constitué de composés pulvérulents, solubles, ou de fibres est mélangé à la résine synthétique et que les fibres de carbone sont ensuite imprégnées du mélange.

7. Procédé pour la préparation de matériaux composites selon la revendication 4 ou 5, dans lequel les fibres de carbone sont imprégnées de la résine synthétique et la matière synthétique est enduite durcie, caractérisé par le fait que le matériau d'appoint constitué de fibres est enroulé lors de la préparation par la technique d'enroulement entre ou sur les fibres de carbone ou, dans la préparatin par le procédé de stratification, est appliqué ou incorpuré entre ou sur les fibres de carbone, et imprégné du matériau de résine synthétique.

8. Procédé selon la revendication 7, caractérisé par le fait que d'autre matériau d'appoint est ajouté à la résine synthétique utilisée pour l'imprégnation, sous forme de poudre ou de composés solubles.